# EUROPEAN PATENT APPLICATION

(11) **EP 1 115 257 A1**
(43) Date of publication of application: **11.07.2001**
(21) Application number: 00306692.5
(22) Date of filing: 07.08.2000
(51) Int. Cl.: H04Q 3/52, H04Q 11/00

(54) **An optical crossbar switch**

(30) Priority: 06.01.2000 US 478630
(71) Applicant: LUCENT TECHNOLOGIES INC., Murray Hill, New Jersey 07974-0636 (US)
(72) Inventor: Ranganath, Minakanagurki V., Holmdel, New Jersey 07733 (US); Ribera, John Frank, Howell, New Jersey 07731 (US)
(74) Representative: Watts, Christopher Malcolm Kelway, Dr.

(57) **Abstract**

An optical crossbar switch comprises an array of modified liquid crystal pixels (LCPs) (herein referred to as, simply, LCPs). Each LCP is constructed by adding a dichroic dye to the liquid crystal, where the liquid crystal has no polarizers. The array comprises *N x M* LCPs, where *N* > *0, M > 0*, and *M* may equal *N.* The array is coupled to (a) *N* optical fibers (or input optical channels) for receiving *N* input optical signals, and (b) *M* optical fibers (or output optical channels) that provide *M* output optical signal paths, and (c) a control element. The latter turns on and off individual cells (i.e., LCPs) of the array for switching at least one of the *N* input optical signals to at least one of the *M* output optical signal paths.

## Description

### BACKGROUND OF THE INVENTION

### (1) FIELD OF THE INVENTION

This invention relates generally to optical switching and, more particularly, to optical crossbar switching.

### (2) BACKGROUND ART

In the area of optical communications, there is a need to perform high-speed switching between a plurality of inputs and a plurality of outputs. One suggested approach is to use a two-dimensional (*NxN*) array of micro-mirrors as the basis for an intelligent crossbar switch that allows switching each one of *N* optical input channels to a particular one of *N* optical output channels. The movement of each micro-mirror is individually controlled, via attachment to a mechanical hinge, so that each micro-mirror is mechanically adjusted to be either reflective or non-reflective. This provides for arbitrary switching between a particular one of the *N* incoming optical channels and one of the *N* output optical channels. Merging micro-mirror technology with currently available submicron silicon CMOS (complementary-symmetry metal-oxide-semiconductor) fabrication technologies provides for optical switching at the chip level. This provides the ability to perform *NxN* switching with low signal attenuation in a very compact volume.

Unfortunately, such mechanical assemblies may produce cross-talk, propagation delay and wavelength distortion. In addition, these mechanical assembly chip-based systems may be costly, temperature sensitive and require periodic recalibration.

### SUMMARY OF THE INVENTION

An optical switch comprising an array of optical conductors for switching at least one input optical signal to at least one of a plurality of output optical signal paths.

In an embodiment of the invention, the array of optical conductors comprises an array of modified liquid crystal pixels (LCPs) (herein referred to as, simply, LCPs). Each LCP is illustratively constructed by adding a dichroic dye to the liquid crystal, where the liquid crystal has no polarizers. The array comprises *N x M* LCPs, where *N > 0*, *M > 0*, and *M* may equal *N.* The array is coupled to (a) *N* optical fibers (or input optical channels) for receiving *N* input optical signals, and (b) *M* optical fibers (or output optical channels) that provide *M* output optical signal paths, and (c) a control element. The latter turns on and off individual cells (i.e., LCPs) of the array for switching at least one of the N input optical signals to at least one of the *M* output optical signal paths.

### BRIEF DESCRIPTION OF THE DRAWING

FIG. 1 shows an illustrative block diagram of an optical crossbar switch in accordance with the principles of the invention;
FIG. 2 shows another illustrative block diagram of an optical crossbar switch in accordance with the principles of the invention;
FIGs. 3 - 5 shows an illustrative diagram of an array of optical conductors in accordance with the principles of the invention;
FIG. 6 shows an illustrative mapping table;
FIG. 7 shows another illustrative embodiment of an optical crossbar switch in accordance with the principles of the invention;
FIGs. 8 and 9 show other illustrative mapping tables;
FIG. 10 shows an illustrative row of optical conductors in accordance with the principles of the invention;
FIG. 11 shows an illustrative top plan view of an optical conductor array comprising liquid crystal pixels;
FIGs. 12 - 18 show illustrative semiconductor structures; and
FIGs. 19 - 20 show a portion of a construction method of a pixeled image optical switch.

### DETAILED DESCRIPTION

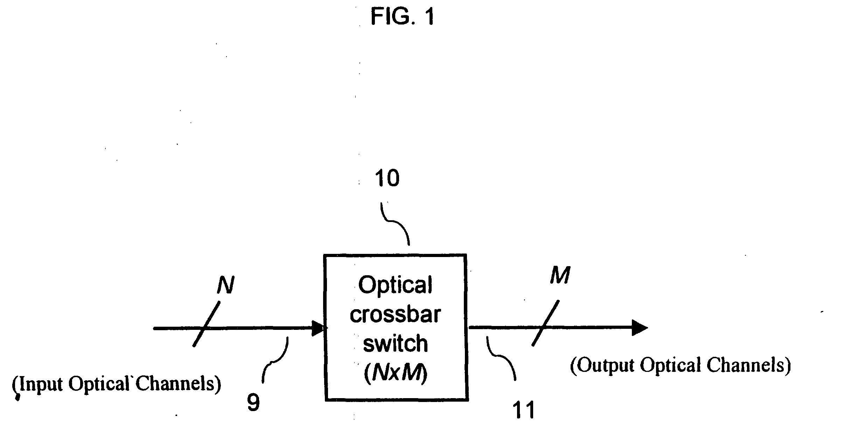

An illustrative embodiment of the invention is shown in FIG. 1. Other than the inventive concept, the elements shown in FIG. 1 are well-known and will not be described in detail. For example, input optical channels, such as optical fibers, are well-known in the art and are not described herein. In accordance with the inventive concept, an optical crossbar switch 10 switches any one of *N* input optical signals (present on one of *N* input optical channels 9) to any one of *M* output optical channels 11. For the purposes of this example, it is assumed that each input optical signal conforms to, e.g., Optical Carrier (OC) 192, which is an optical signal format standard supporting transmission in the Gigabit per second (Gbps) range for use in a Synchronous Optical Network (SONET) (not shown), which may further include wavelength division multiplexed (WDM) optical signals.

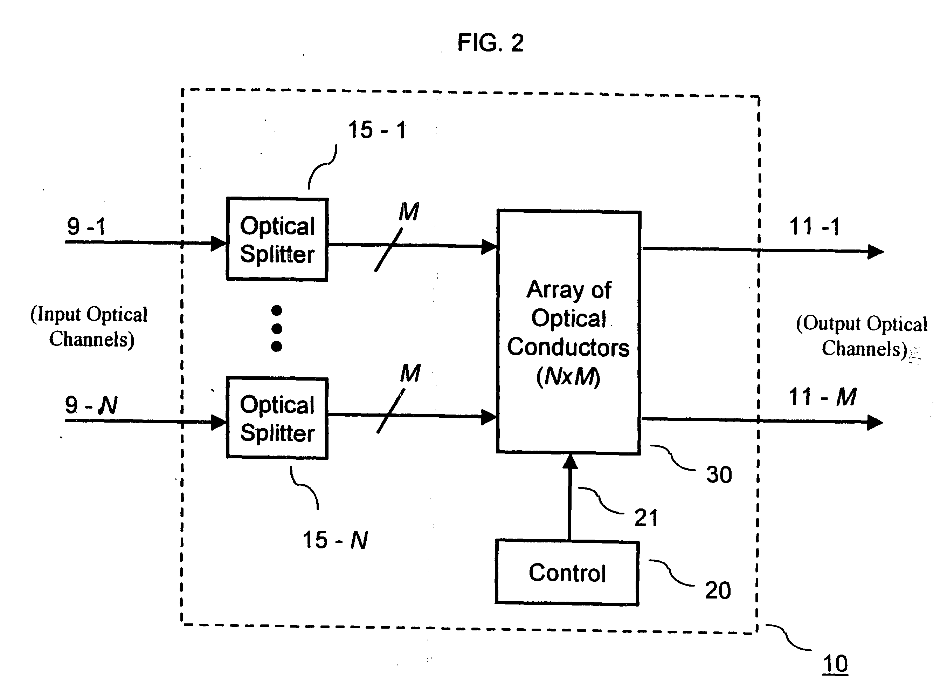

Another illustration of optical crossbar switch 10 is shown in FIG. 2. Optical crossbar switch 10 includes a plurality of optical splitters 15-1 through 15-*N*, array of optical conductors (array) 30 and control element 20. Again, other than the inventive concept, the elements shown in FIG. 2 are well-known and will not be described in detail. For example an optical splitter is well-known in the art. Similarly, control element 20 is a stored-program control based-processor (e.g., a microprocessor) with associated memory (not shown) and will not be described further. (Also, it should be noted that although the optical splitters are shown as a part of optical crossbar switch 10, this is for illustration purposes only and, e.g., could be placed external to optical crossbar switch 10.)

As shown in FIG. 2, *N* input optical channels (e.g., optical fibers) 9-1 to 9-N, each of which convey an optical signal (e.g., a OC192 WDM optical signal), are applied to splitters 15-1 to 15-N, respectively. Each optical splitter splits an input optical signal into *m* duplicates (albeit at reduced power compared to the respective input optical signal). The *m* duplicates are also referred to herein as a group of *m* split signals. Array 30 comprises *N x M* optical conductors, where *N* > *0*, *M* > *0*, and *M* may equal *N*. Array 30 is coupled to the *N* input optical channels, via the respective splitters. For this example, it is assumed that *m* = *M*. Array 30 is also coupled to *M* optical fibers (or output optical channels) that provide *M* output optical signal paths. Control element 20 controls array 30, via control signaling 21, to switch each of the *N* input optical signals to one of the *M* output optical channels in accordance with a mapping table (described below) that maps signals appearing on each input optical channel to output optical channels. In other words, control element 20 turns on, and off, individual cells (i.e., optical conductors) of array 30 for switching at least one of the *N* input optical signals to at least one of the M output optical signal paths.

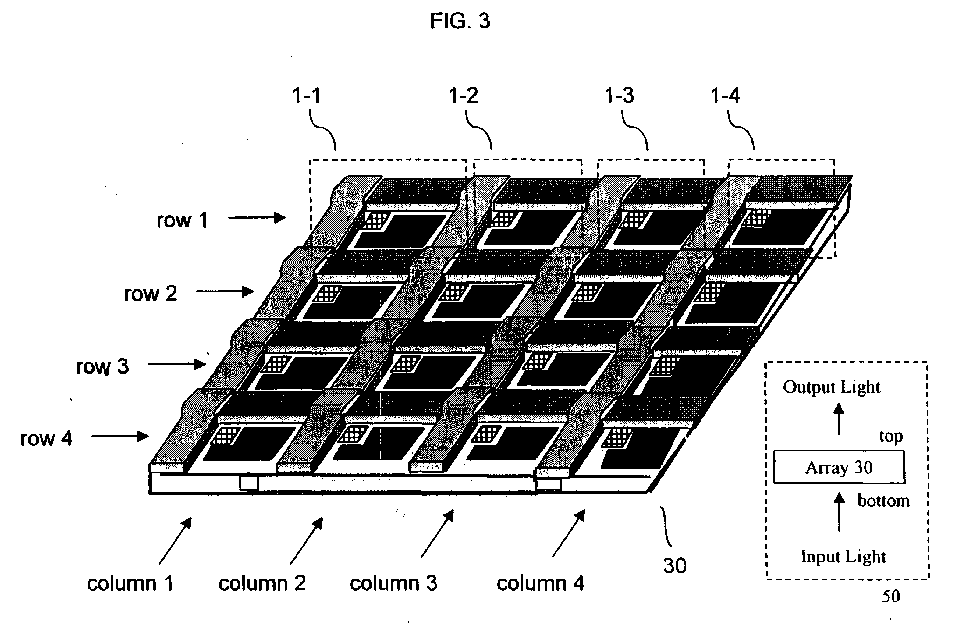

Turning now to FIG. 3, an illustrative top, front, and right side perspective view of an embodiment of array 30 is shown (not to scale). To simplify the description, the following exemplary definitions are made:
- *N* represents the number of rows of array 30;
- *M* represents the number of columns of array 30; and
- *N* = *4*, *M* = *4*, i.e., array 30 comprises a 4x4 array of optical conductors fur switching any one of 4 input optical signals to 4 output optical channels.

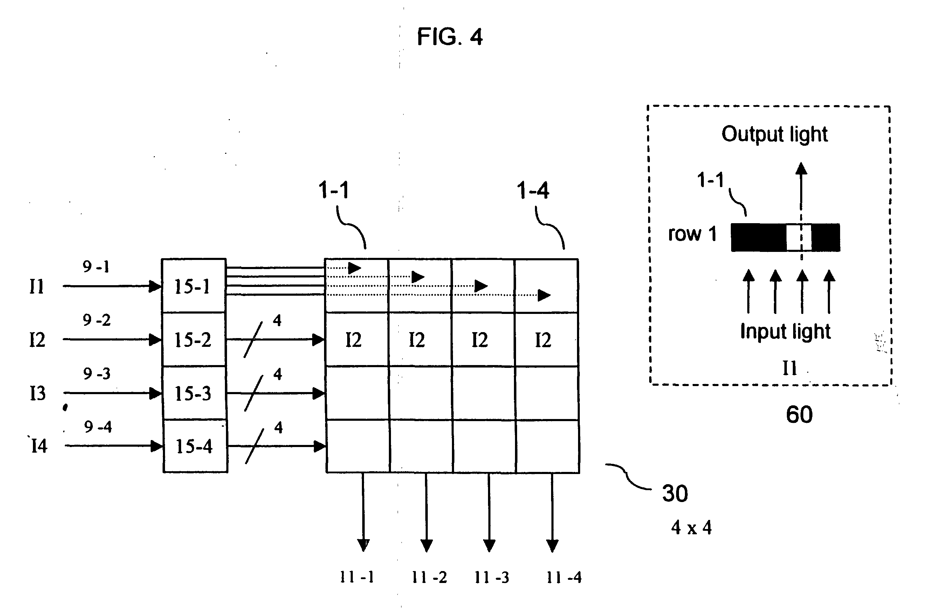

As shown in FIG. 3, array 30 comprises 16 optical conductors (i.e., *(N)(M))*, of which optical conductor 1-1 is representative (described further below). Optical conductor 1-1 is the element, or cell, in the first row and first column of array 30. As described further below, each row of array 30 is associated with a respective input optical channel and each column of array 30 is associated with a respective output optical channel. Since array 30 has 4 columns (i.e., *M* = *4*), each input optical signal is spilt into 4 (i.e., *M*) optical signals by a splitter as shown in FIG. 2. As indicated by dashed box 50 of FIG. 3, an input optical signal is applied to the bottom of array 30, which provides output optical signals at its top. In order to continue the description, attention should now be directed to FIG. 4, which shows an alternative representation of array 30 of FIG. 3.

In FIG. 4, array 30 is modeled as a two dimensional matrix of cells (e.g., cell 1-1 is in the upper left corner and cell 1-4 is in the upper right corner). As can be seen on FIG. 4, there are four input optical signals I1, I2, I3, and I4, each of which are conveyed by input optical channels 9-1, 9-2, 9-3 and 9-4, respectively. Each input optical signal is applied to one row of array 30. In particular, each input optical signal (e.g., I1) is further duplicated by a corresponding splitter (e.g., 15-1) into *M* = *4* optical signals. Each of these optical signals is applied to a particular cell of array 30. For example, input optical signal I1 is spit into four optical signals, each of which is applied to cells 1-1, 1-2, 1-3 and 1-4 as indicated by the four arrows emanating from the right side of splitter 15-1. This is also shown in dashed box 60 of FIG. 4 (described further below). The association of an input optical signal to each row of array 30 is illustrated again in FIG. 4 by row 2 of array 30. As can be seen in row 2 of array 30, input optical signal I2 is split into four optical signals and is applied to cells 2-1, 2-2, 2-3, and 2-4.

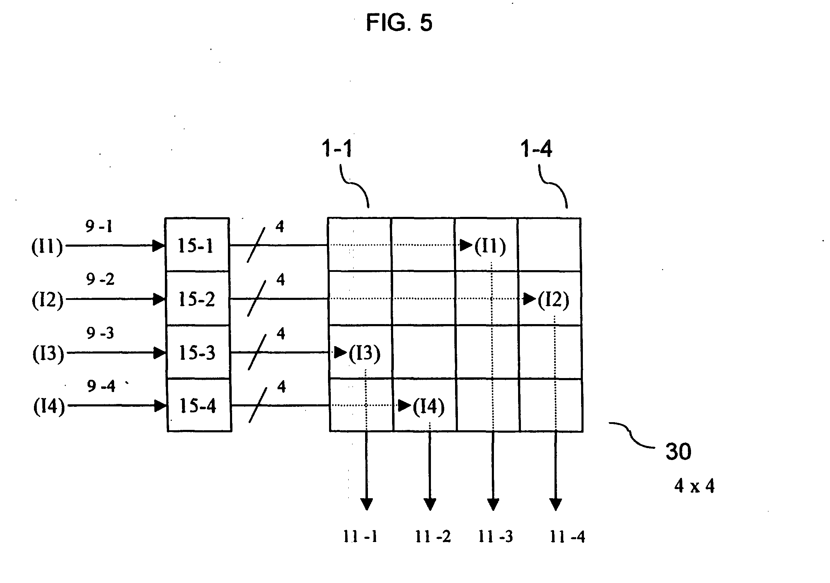

Each optical conductor (or cell) of array 30 is either in the ON state, which conducts (passes or transmits) optical signals (e.g., like a waveguide); or is in the OFF state, which significantly attenuates incident optical signals. In other words, each optical conductor in the ON state is transparent to light for coupling the signal from an input to an output or in the OFF state blocks the incident light. This is illustrated in dashed box 60 of FIG. 4, which shows row 1 of array 30. In this example, cell 1-3 is ON and the remaining cells are OFF. Controlling of the ON or OFF state is provided by control element 20 (described below). It can be observed from FIG. 4 that each column of array 30 is associated with a respective output optical channel. In this example, columns 1, 2, 3 and 4 of array 30 are associated with output optical channels 11-1, 11-2, 11-3 and 11-4. For this example, it is assumed that at most only one cell in a column is turned ON at a time by control element 20. (This is for illustrative purposes only, the inventive concept is not so limited.) As such, when a particular optical conductor in a column of array 30 is turned ON - the input optical signal conducted by that optical conductor is switched to a particular optical output channel in accordance with the principles of the invention. This is illustrated in FIG. 5. As can be observed from FIG. 5, the following optical conductors (cells) are turned ON: cells 3-1, 4-2, 1-3 and 2-4 ― thus switching (or cross-connecting) input optical signals I1, I2, I3 and I4 to output optical channels 11-3, 11-4, 11-1 and 11-2, respectively.

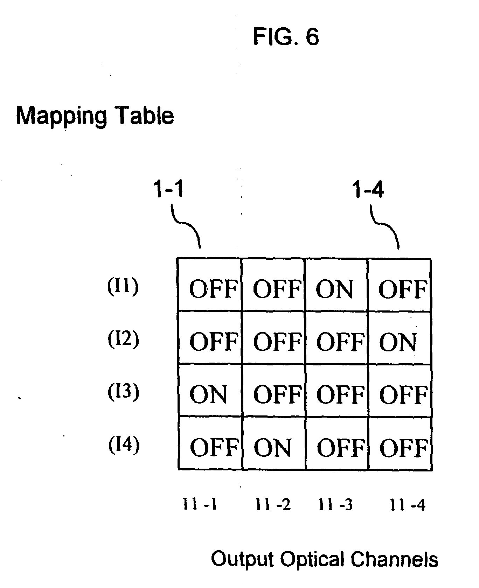

As noted above, control element 20 controls array 30 to switch an input optical signal to a particular one of the output optical channels. This is performed in accordance with a mapping table (or a cross-connect table) stored in memory (not shown) of control element 20. An illustrative mapping table is shown in FIG. 6. The mapping table represents array 30. That is, the mapping table is also a 4x4 (*NxM*) array. As can be observed from FIG. 6, cells 3-1, 4-2, 1-3 and 2-4 of the mapping table are turned ON and the remaining cells are turned OFF Thus, the stored program controlled processor (not shown) of control element 20 controls array 30 in accordance with the corresponding entries in the mapping table. For example, control element 20 turns cell 3-1 of array 30 ON, and turns OFF cells 1-1, 2-1, and 4-1 of column 1 thereby switching input optical signal I3 to output optical channel 11-1 (as also illustrated in FIG. 5). It is presumed that control element 20 is suitably programmed to carry out the above-described method using conventional programming techniques, which, as such, will not be described herein. (For example, the mapping table is simply a data structure of type "array," and the ON and OFF states can be represented by, e.g., binary digits 1 and 0, respectively. Similarly, initialization and updating of the mapping table (either in real-time, or, e.g., periodically) is not described herein. Such initialization and updates can be performed in any number of ways. For example, optical crossbar switch 30 can be connected to a network control point (NCP) as known in the art for receiving switching information.)

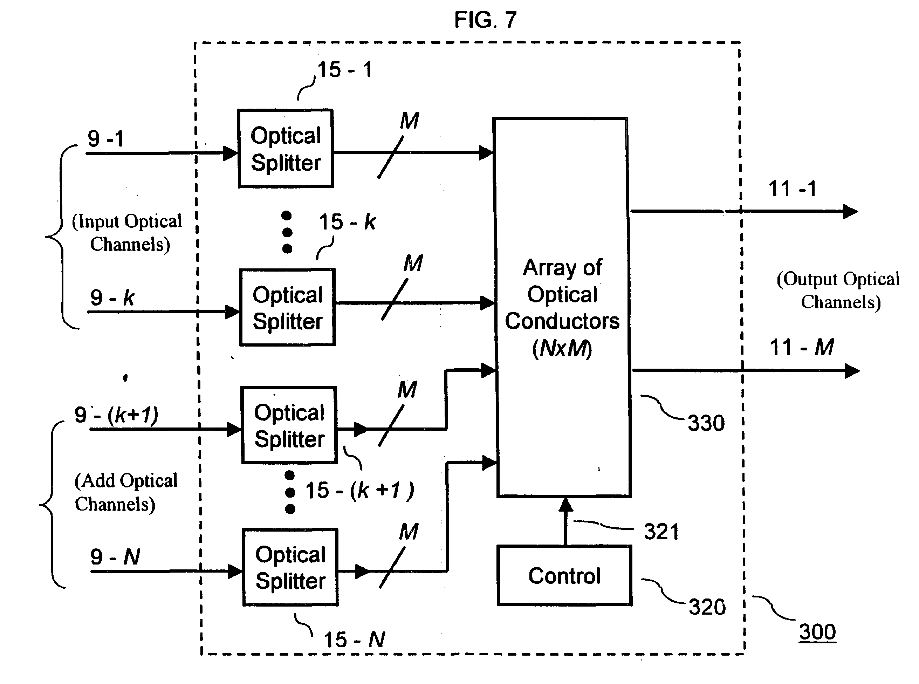

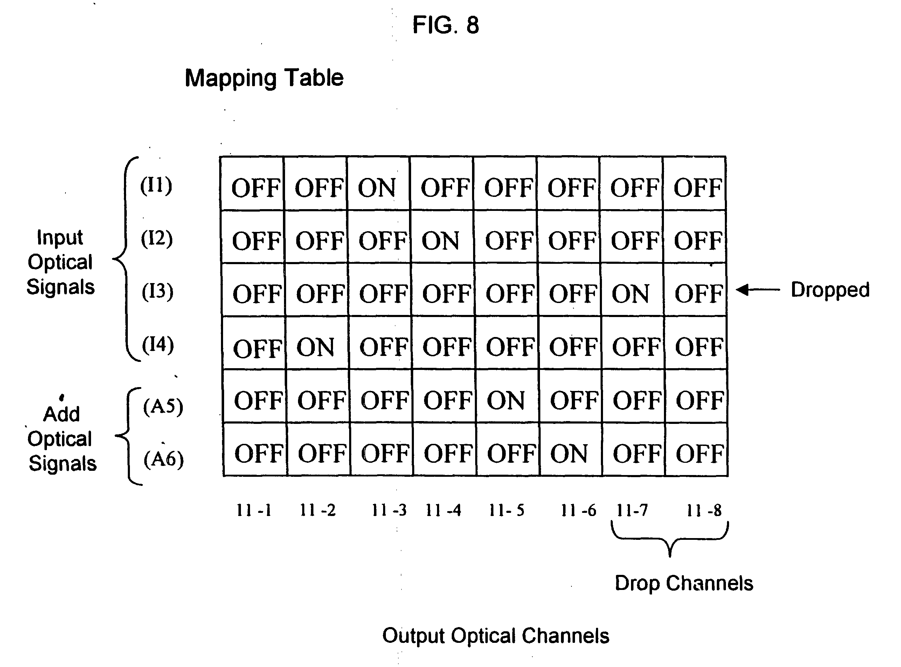

Another embodiment of an optical crossbar switch is shown in FIG. 7. This embodiments is similar to the embodiment of FIG. 2 except that a portion of the input optical signals are "add" signals. Like FIG. 2, optical crossbar switch 300 comprises a plurality of optical splitters, here optical splitters 15 - 1 to 15 - *k* (which serve the input optical channels) and 15 - (*k*+1) to 15 - N, which serve the add optical channels). Optical array 330 is an *NxM* array of optical conductors that enable a particular one of the optical signals conveyed on either the input optical channels or the add optical channels to be switched to one of the *M* output optical channels under the control of control element 320 (which includes a mapping table (not shown)). In addition, the embodiment of FIG. 7 provides the ability to simply "drop" optical signals as known in the art. As further illustration, assume that *N* = 6, of which 4 are input optical channels conveying input optical signals I1, I2, I3 and I4, respectively, and 2 are add optical channels conveying add optical signals A4 and A5, respectively. In addition, assume that there are *M = 8* output optical channels. An illustrative mapping table for use by control element 320 is shown in FIG. 8. As can be observed from FIG. 8, control element 320 controls optical array 330 to switch input optical signals, I1, I2, and I4 to output optical channels 11-1, 11-4 and 11-2, respectively. In addition, input optical signal I3 is *dropped* and optical signals A5 and A6 are *added* to output optical channels 11-5 and 11-6, respectively. The dropped optical signal 13 appears on output optical channel 11-7, which is designated as one of the drop channels. Therefore, and in accordance with the invention, add/drop capability is performed within the switch. That is, the add/drop feature is internal to the switch itself.

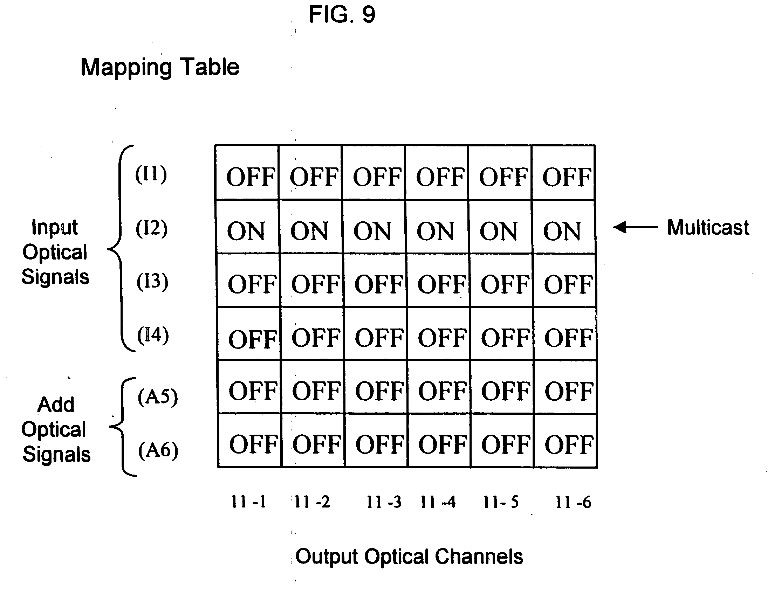

Similar to the add/drop capability illustrated by the mapping table of FIG. 8, an optical crossbar switch in accordance with the invention can also be modified to perform "multi-casting" within the switch itself. An illustrative mapping table is shown in FIG. 9 for multicasting input optical signal I2 to all output optical channels.

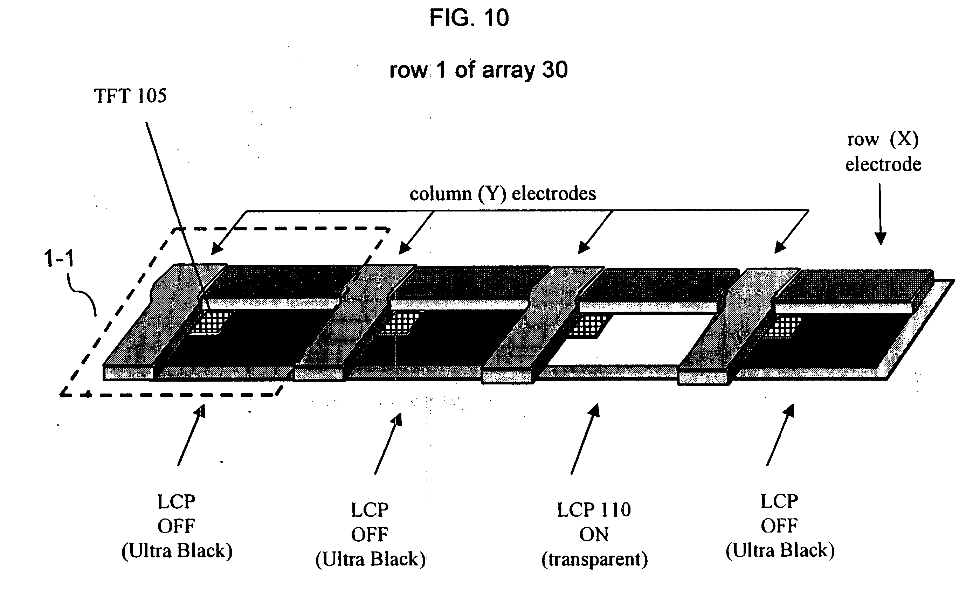

In an embodiment of the invention, the array of optical conductors comprises an array of modified liquid crystal pixels (LCPs) (herein referred to as, simply, LCPs). Each LCP is illustratively constructed by adding a dichroic dye to the liquid crystal, where the liquid crystal has no polarizers. As illustration, 4x4 array 30 is described. Turning to FIG. 10, a top, front, and right side perspective view of just row 1 of array 30 is shown (not to scale). As noted above (also see FIG. 3), row 1 comprises 4 optical conductors: cell 1-1, cell 1-2, cell 1-3 and cell 1-4. Representative cell 1-1 comprises a thin film transistor (TFT) 105 (i.e., a switching element), an LCP 110 that is switched to the OFF state by TFT 105, which is controlled by controller 20 (per, e.g., the mapping table of FIG. 6) via a column electrode and a row electrode (coupled to control signaling 21). The remaining LCPs, or cells, of row 1 are in the following states: cell 1-2 is OFF, cell 1-3 is ON and cell 1-4 is OFF. Thus, each LCP effectively acts as a shutter, which is either open or closed to the incident light. (It should be observed that each LCP is passive, i.e., each LCP is not an active element in the sense of amplifying the incident optical signal. However, the inventive concept is not so limited.)

With respect to an array of LCPs, the following exemplary definitions are made:
- *Array Width =*: *D*;
- *Array Height =*: *C;*
- *Pixel Width =*: *a;*
- *Pixel Height* =: *b*;
- *Pixel Pitch* =: the measurement from the center of one pixel to the center of the next adjacent pixel;
- *Pixel Aspect Ratio* =: the ratio between the height of a pixel and the width of the pixel - *b/a*;
- *Pixel Area =*: *(b)(a)*;
- *Total Pixel Area =*: *(N)(M)(b)(a)*, where *N* and *M* are the array dimensions;
- *Total Array Area =*: *(C)(D)*;
- *Fill Factor =*: *(Total Pixel Area/Total Array Area);*
- *TFT* (thin film transistor) *width =*: *e;*
- *TFT height* =: *f*;
- *TFT area =*: *(e)(f)*;
- *Pixel Opening =*: *(Pixel Area - TFT area)*; and
- *Aperture Ratio =*: *Pixel Opening/Pixel Area.*

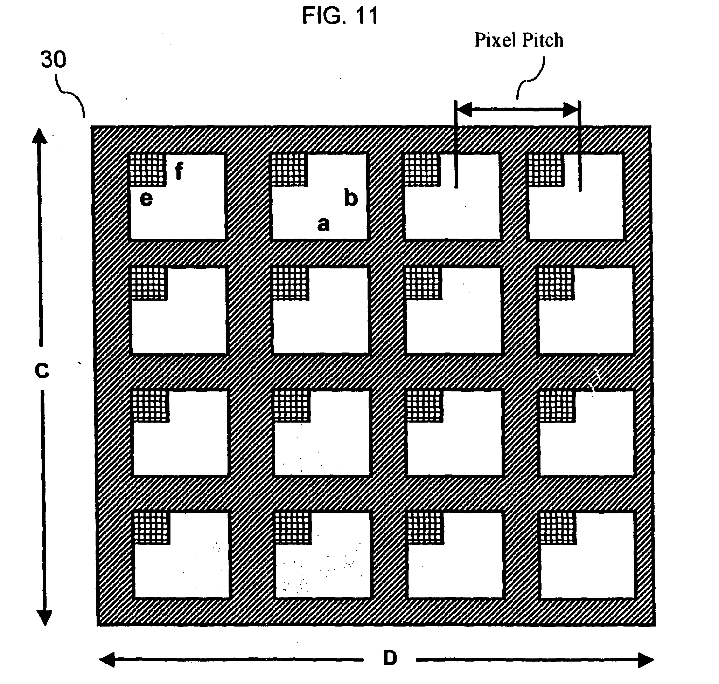

These definitions are illustrated with respect to array 30 in FIG. 11, which is an illustrative top plan view of array 30 (not to scale). It should be noted that a larger aperture ratio reduces loss and improves efficiency. Aperture Ratio can be increased by, e.g., reducing the area of the TFT and/or reducing the width of the row and column electrodes (also referred to as bus bars).

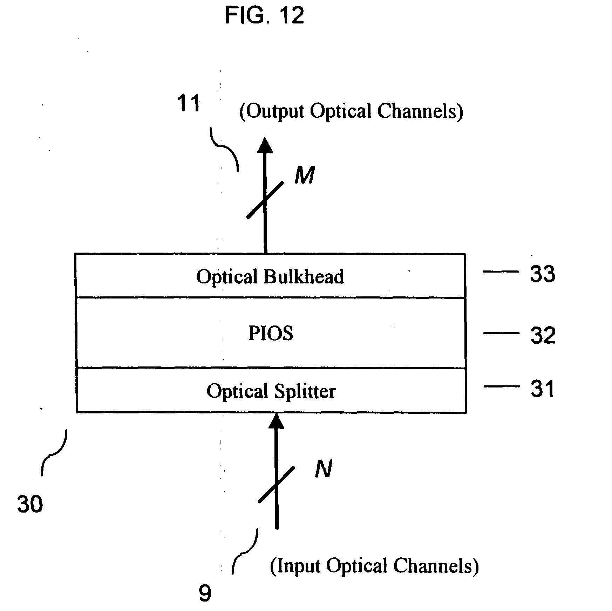

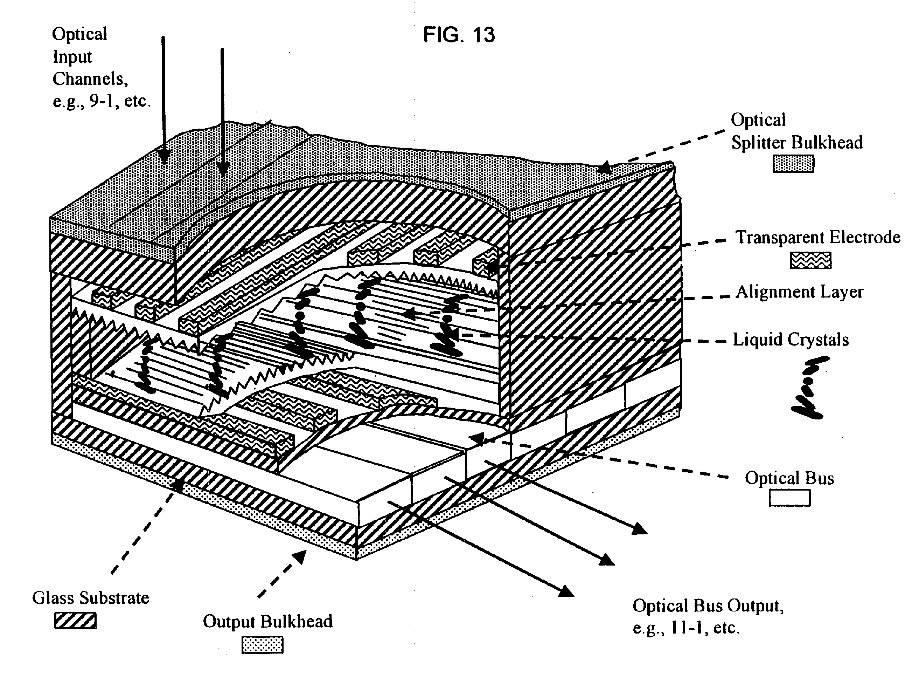

As used herein, the term "Pixel Image Optical Switch (PIOS)" refers to optical array 30 when optical array 30 comprises an array of LCPs. Illustrative semiconductor structures for use in a PIOS are shown in FIGs. 12, 13, 14, 15, 16 and 17. Other than the inventive concept, semiconductor fabrication is known in the art and is not described herein. FIG. 12 shows an illustrative PIOS structure. As can be observed from FIG. 12, a splitter bulkhead 31, as known in the art, is used to split the input optical signals 9 for application to PIOS 32. Similarly, an optical bulkhead 33 is used to provide the output optical signals 11 switched by PIOS 32. A portion of a more detailed illustrative structure is shown in FIG. 13, which is a top, front, right side cut-away perspective view (not to scale). The modified LCP is preferably an ultra black liquid crystal material as known in the art without a polarizer. Instead of a polarizer a dichroic dye is added to the liquid crystal. Other than the inventive concept, the use of dichroic dye in liquid crystals is known in the art. (Historically, dichroic dyes have been used in LCPs in place of polarizers.)

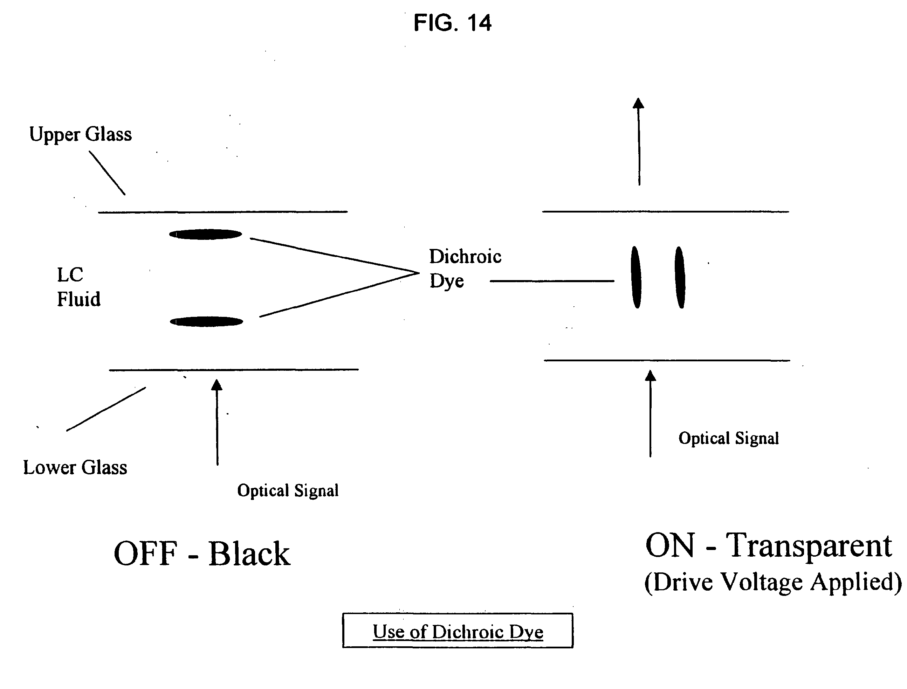

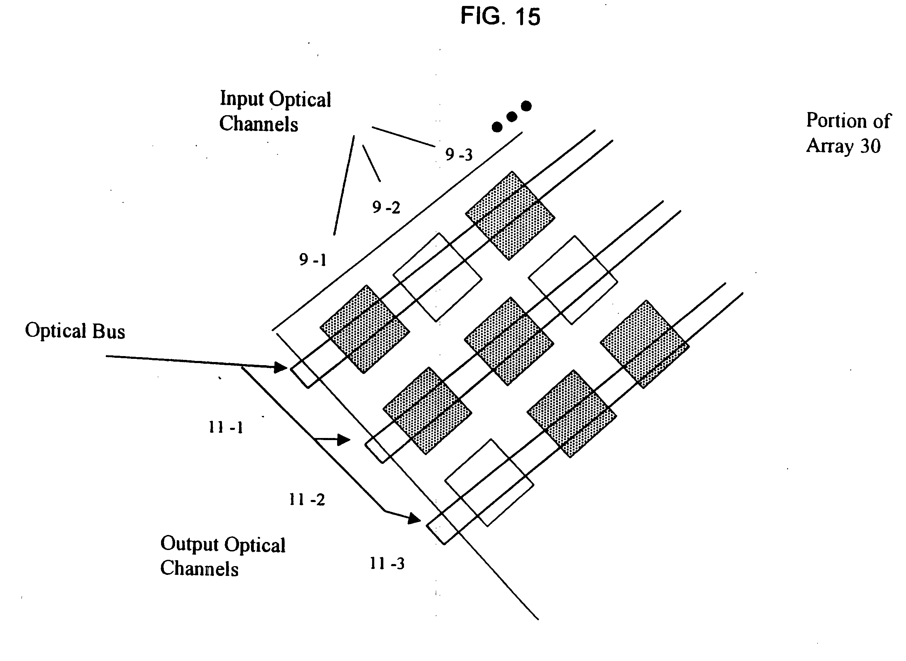

The affect of dichroic dye in a liquid crystal is illustrated in FIG. 14. In the OFF state, the dichroic dye blocks the transmission of the optical signal, while in the ON state, the dichroic dye enables transmission of the optical signal. Thus, the independently addressable, or selectable, LCPs either block, rotate or pass through an incident optical beam. Consideration in the design of LCPs is the ability to switch-in the OFF state without leakage, and provide minimum insertion loss in the ON state. Insertion loss between ranges of 1.9 to 3.0 dB are expected through an LCP shutter in the ON state with cross-talk of less than 40 dB. The insertion loss and can be further adjusted if needed using known optical design techniques. The type of liquid crystal fluid selected is based on temperature range and cost desired, for example. (Liquid crystal fluids ― their temperature ranges and costs ― are known in the art, and not described herein.) As illustration, a temperature range between -40°Celsius (C) and 85°C might be used. The amount of liquid crystal material and contrast (e.g., amount of dichroic dye) depend upon the selected cell size, speed of liquid crystal fluid and other design constraints. It should be noted that since the above-described PIOS interfaces directly to single or multi-mode fiber (e.g., via the splitter and bulkhead) an optical translator is not required. For completeness, FIG. 15 shows an illustrative top elevational view (not to scale) of a portion of array 30. It should be noted that input optical channels 9-1, 9-2 and 9-2 are applied to the rows of the PIOS (note: the splitter is not shown for simplicity (e.g.; see FIGs. 12 and 13)), while columns of the PIOS are coupled to the optical bus for coupled to output optical channels 11-1, 11-2 and 11-3 via the optical bulkhead 33 (not shown in FIG. 15).

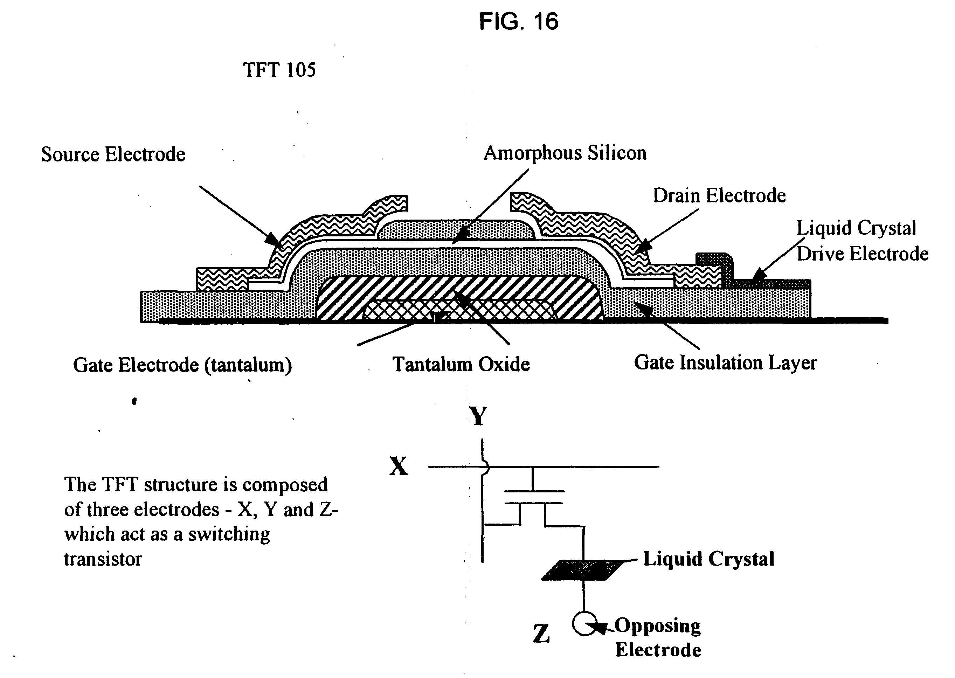

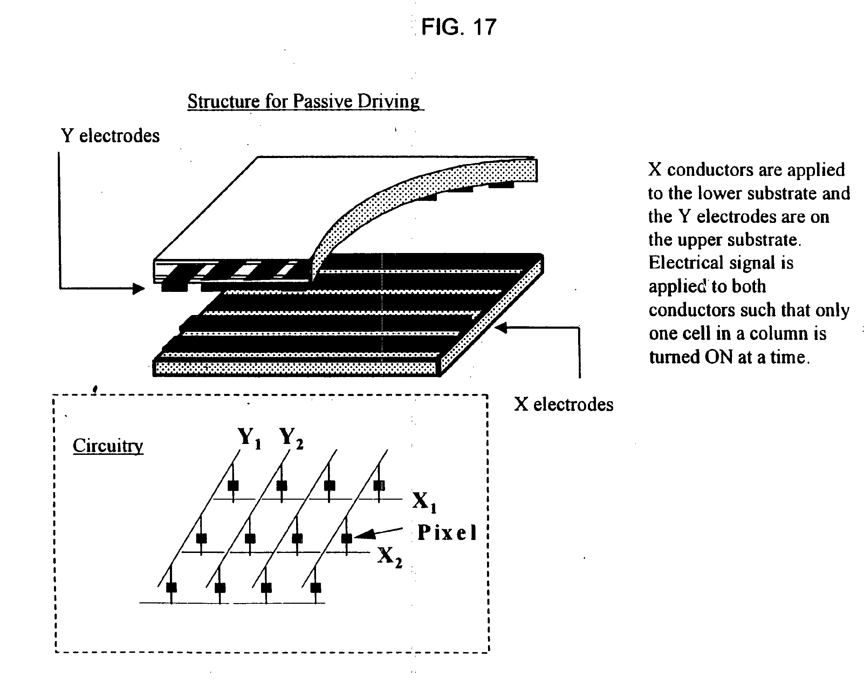

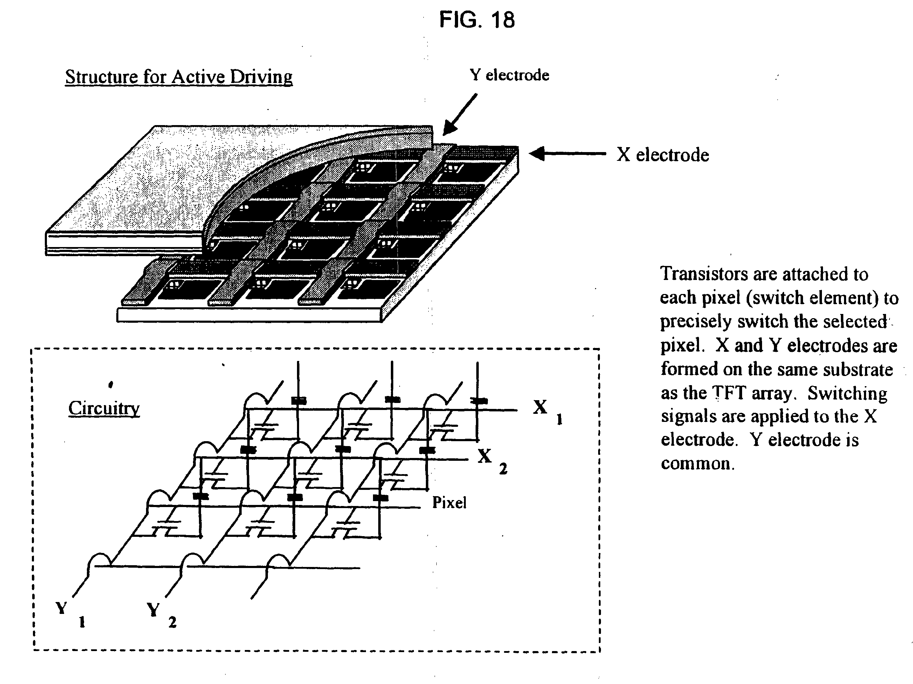

An illustrative structure for TFT 105 is shown in FIG. 16, which is a front elevational view (not to scale). FIG. 17 shows an illustrative structure for a passive matrix drive system for driving a PIOS. Alternatively, FIG. 18 shows an illustrative structure for an active matrix drive system.

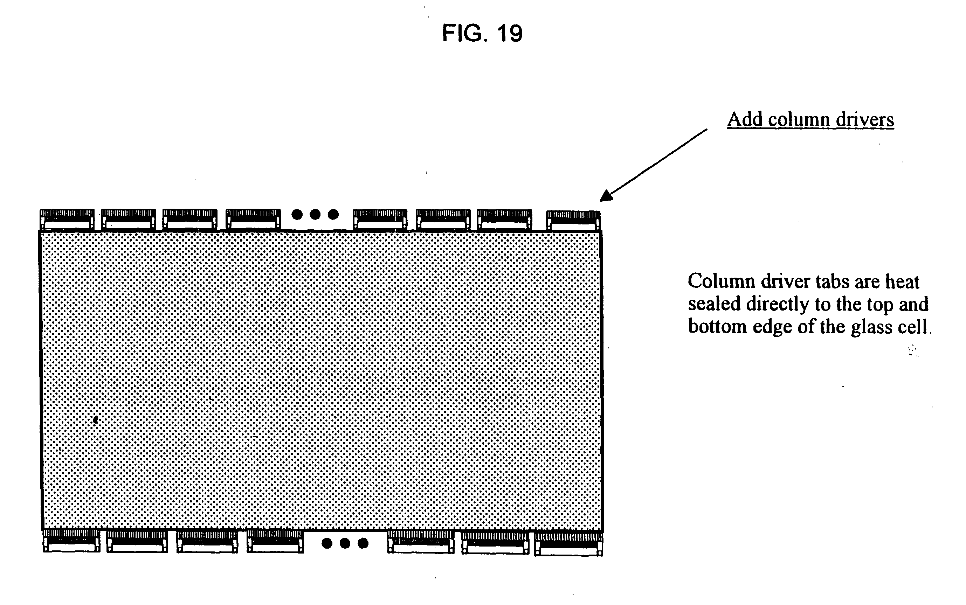

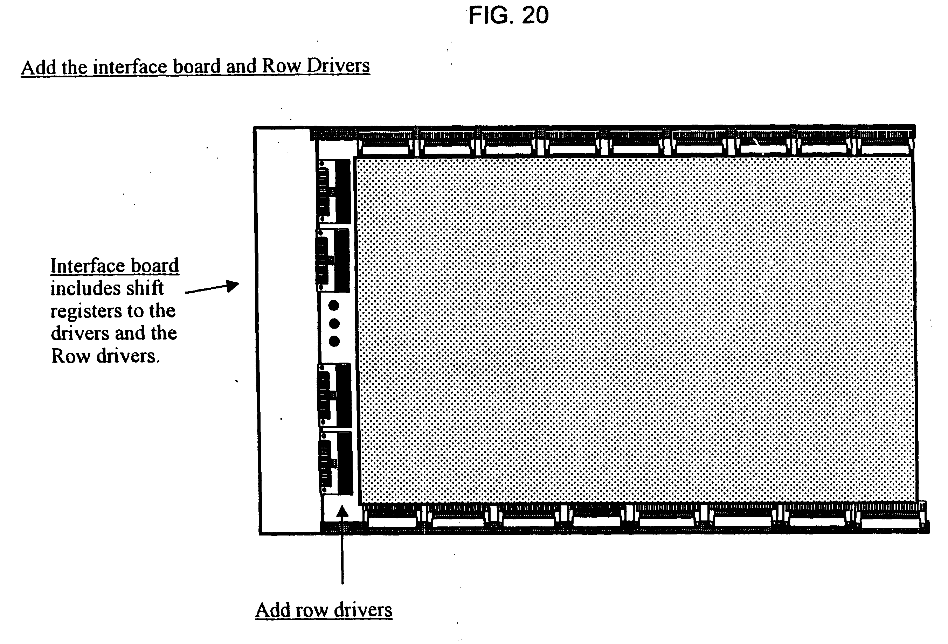

Portions of a suggested construction method for a PIOS switch is shown in FIGs. 19 and 20, which, since - other than the inventive concept - semiconductor construction is well-known in the art are not described herein.

As described above, the inventive concept provides an optical conductor crossbar switch for cross-connecting high-speed optical signals such that all optical switching takes place in the light domain, through an array of optical conductors, or optical valves, under program control. This design results in the reduction, if not elimination, of the use of mechanical parts. For example, since the optical switching is performed without the mechanical adjustment of mirrors, improved performance should result with respect to cross-talk, propagation delay, and waveform distortion. In addition, and as described above, the optical conductor crossbar switch provides an add/drop capability in real-time with delays in the micro second range. In addition, due to optical design of the switch, standardized link aggregation protocols may be applied as separate gigabit links.

The foregoing merely illustrates the principles of the invention and it will thus be appreciated that those skilled in the art will be able to devise numerous alternative arrangements which, although not explicitly described herein, embody the principles of the invention and are within its scope. For example, although the illustrative embodiment described the use of *N* input optical channels and *M* output optical channels, the number of input optical channels can be less than *N*, and the number of output optical channels can be less than *M*. In addition, although described in the context of enabling only one optical conductor in a column at a time, multiple optical conductors could be enable at the same time in the same row ― care should be taken with respect to the signal level of the resulting combined signal. Further, although described in the context of a modified LCP, other equivalent optical conductors also fall within the scope of the invention as claimed below. For example, an LCP constructed with polarizers can also be used. In this case, care must be taken with respect to the amount of optical loss introduced by the polarizers. Similarly, although the inventive concept was illustrated in terms of a two dimensional 4x4 optical array, other dimensions and sizes may be possible. For example, splitters capable of splitting out 1024 optical signals are known in the art. (Splitters are available from companies such as TECOS, Duesseldorf Germany; and Photonic Integration Research Inc., Ohio.) Such a splitter can be used to interface, e.g., to a 1024x1024 optical array in accordance with the principles of the invention.

## Claims

1. Apparatus for switching optical signals, the apparatus comprising:
an array of optical elements, wherein each optical element is controllable to be either transparent to an optical signal or block an optical signal, and wherein the array is at least two-dimensional having dimensions of at least *N x M*, wherein *N > 0, M > 0*, and *M* may equal *N*; and
a controller for controlling the array to switch at least one of *n* optical signals applied to the array to at least one of *m* output optical signal paths coupled to the array, where 1 < *n ≤ N*, and 1 ≤ *m* ≤ *M*.

2. The apparatus of claim 1 wherein the controller controls the array to multicast at least one of the *n* optical signals to at least two of the *m* output optical signals.

3. The apparatus of claim 1 wherein the controller controls the array in such a way to be able to add and drop optical signals.

4. The apparatus of claim 1 further comprising at least one splitter for dividing at least one of the n optical signals into *m* split optical signals, which are applied to a row of the array.

5. The apparatus of claim 1 wherein each optical element comprises a liquid crystal.

6. The apparatus of claim 5 wherein each optical element further comprises a switching element for controlling an ON and OFF state of the liquid crystal.

7. The apparatus of claim 5 wherein a dichroic dye is added to each liquid crystal.

8. The apparatus of claim 5 wherein each liquid crystal further comprises a polarizer.

9. The apparatus of claim 1 wherein the array of optical elements comprises an array of liquid crystals that are capable of being individually addressed for performing the switching.

10. The apparatus of claim 9 wherein each optical element further comprises a switching element for controlling an ON and OFF state of an associated liquid crystal of the liquid crystal array.

11. The apparatus of claim 9 wherein a dichroic dye is added to each liquid crystal.

12. The apparatus of claim 9 wherein each liquid crystal further comprises a polarizer.
